# EUROPÄISCHE PATENTSCHRIFT

(11) **EP 1 322 872 B1**
(45) Veröffentlichungstag und Bekanntmachung des Hinweises auf die Patenterteilung: **06.05.2004**
(21) Anmeldenummer: 01982126.3
(22) Anmeldetag: 19.09.2001
(51) Int. Cl.: F16D 65/21

(54) **SCHEIBENBREMSE MIT VERSTELLBARER LINEARFÜHRUNG DES BREMSBELAGS**
DISK BRAKE WITH ADJUSTABLE LINEAR GUIDE OF THE BRAKE LINING
FREIN A DISQUE

(30) Priorität: 19.09.2000 DE 10046177
(43) Veröffentlichungstag der Anmeldung: 02.07.2003
(73) Patentinhaber: ROBERT BOSCH GMBH, 70442 Stuttgart (DE)
(72) Erfinder: BAUMANN, Dietmar, 71282 Hemmingen (DE); SCHMIDT, Hanniel, 76307 Karlsbad (DE); VOLLERT, Herbert, 71665 Vaihingen/Enz (DE); KELLER, Frieder, 76698 Ubstadt-Weiher (DE)
(86) Internationale Anmeldenummer: PCT/DE2001/003597
(87) Internationale Veröffentlichungsnummer: WO 2002/025137

(56) Entgegenhaltungen:
- WO-A-96/03301
- GB-A- 2 291 150
- US-A- 4 852 699
- PATENT ABSTRACTS OF JAPAN vol. 1999, no. 03, 31. März 1999 (1999-03-31) & JP 10 331884 A (AKEBONO BRAKE RES &DEV CENTER LTD), 15. Dezember 1998 (1998-12-15)

## Beschreibung

### Stand der Technik

Die Erfindung betrifft eine Scheibenbremse mit den Merkmalen des Oberbegriffs des Anspruchs 1.

Scheibenbremsen sind an sich bekannt. Sie weisen eine Bremsscheibe sowie üblicherweise zwei beiderseits der Bremsscheibe angeordnete Reibbremsbeläge auf. Die Reibbremsbeläge sind in einem Bremssattel aufgenommen. Die meisten der heute verwendeten Scheibenbremsen werden hydraulisch betätigt, d. h. die Reibbremsbeläge werden zum Erzeugen eines Bremsmoments hydraulisch gegen die Bremsscheibe gedrückt. Dabei ist es möglich, jeden Reibbremsbelag mit einem ihm zugeordneten Hydraulikkolben gegen die Bremsscheibe zu drücken. Ebenfalls ist es möglich, einen der beiden Reibbremsbeläge hydraulisch gegen die Bremsscheibe zu drücken und den anderen Reibbremsbelag durch eine über den Bremssattel übertragene Reaktionskraft gegen die andere Seite der Bremsscheibe zu drücken. Der Bremssattel ist in diesem Fall als quer zur Bremsscheibe verschieblicher Schwimmsattel ausgebildet.

Auch ist vorgeschlagen worden, Scheibenbremsen elektromechanisch zu betätigen. Hierzu wird beispielhaft verwiesen auf die WO 96/03301. Die Betätigungskraft zum Drücken des einen Reibbremsbelags gegen die Bremsscheibe wird in diesem Fall mit einem Elektromotor über ein Rotations/Translations-Umsetzungsgetriebe, beispielsweise einen Spindeltrieb, auf den Reibbremsbelag ausgeübt. Die elektromechanischen Scheibenbremsen haben jedoch den Nachteil, dass sie zur Erzeugung einer ausreichend hohen Zuspannkraft (dies ist die Kraft, mit der der Reibbremsbelag gegen die Bremsscheibe gedrückt wird) und zum schnellen Zuspannen und Lösen, also zum Erzielen einer ausreichend hohen Dynamik, einen großen und infolgedessen schweren Elektromotor benötigen. Dies ist unerwünscht, da sich die Scheibenbremse nur schlecht im Innenraum einer Felge eines Fahrzeugrades unterbringen lässt, wo sie üblicherweise angeordnet ist. Zudem ist die Scheibenbremse üblicherweise an einem Radträger angebracht und bildet eine ungefederte Masse. Ein hohes Gewicht der ungefederten Masse wirkt sich nachteilig auf eine Straßenlage eines Fahrzeugs aus und ist deswegen unerwünscht. Weiterer Nachteil bekannter, elektromechanischer Scheibenbremsen ist deren hohe Stromaufnahme, die ein elektrisches Bordnetz eines Kraftfahrzeug erheblich belastet.

### Vorteile der Erfindung

Die erfindungsgemäße Scheibenbremse mit den Merkmalen des Anspruchs 1 weist eine Führung für den Reibbremsbelag auf, deren Winkel zur Bremsscheibe verstellbar ist. Es ist also eine Verschieberichtung des Reibbremsbelags in ihrem Winkel zur Bremsscheibe beim Drücken des Reibbremsbelags gegen die Bremsscheibe verstellbar. Wird der Reibbremsbelag zum Bremsen gegen die rotierende Bremsscheibe gedrückt, übt die Bremsscheibe eine Reibungskraft auf den Reibbremsbelag aus, die parallel zur Bremsscheibe in deren Umfangs- bzw. Sekantenrichtung und in Drehrichtung der Bremsschreibe gerichtet ist. Ist die Führung des Reibbremsbelags in einem von einem rechten Winkel abweichenden, schrägen Winkel zur Bremsscheibe verstellt, bewirkt die von der Bremsscheibe auf den Reibbremsbelag ausgeübte Reibungskraft eine Kraftkomponente in Längsrichtung der Führung. Diese auf den Reibbremsbelag einwirkende Kraftkomponente drückt den Reibbremsbelag zusätzlich zu der von der Betätigungseinrichtung ausgeübten Zuspannkraft gegen die Bremsscheibe und erhöht damit das Bremsmoment der erfindungsgemäßen Scheibenbremse. Die Höhe der von der rotierenden Bremsscheibe als Folge der zwischen der Bremsscheibe und dem gegen sie gedrückten Reibbremsbelag über die in ihrem Winkel zur Bremsscheibe verstellbaren Führung auf den Reibbremsbelag ausgeübte, zusätzliche Andruckkraft ist abhängig vom Winkel, in welchem die Führung zur Bremsscheibe steht. Die zusätzliche Andruckkraft bewirkt eine Bremsunterstützung der erfindungsgemäßen Scheibenbremse, es wird nur ein Teil der Zuspannkraft des Reibbremsbelags gegen die Bremsscheibe von der Betätigungseinrichtung aufgebracht. Die Höhe der Bremsunterstützung ist durch Verstellung des Winkels der Führung des Reibbremsbelags zur Bremsscheibe einstellbar.

Die Bremsunterstützung der erfindungsgemäßen Scheibenbremse hat den Vorteil, dass eine geringe Betätigungsenergie zu ihrer Betätigung ausreicht. Weitere Vorteile sind eine hohe Dynamik beim Zuspannen und Lösen. Hinzu kommt der Vorteil, dass die Höhe der Bremsunterstützung durch Verstellung der Führung des Reibbremsbelags einstellbar und auch während der Betätigung der Scheibenbremse veränderbar ist.

Die Unteransprüche haben vorteilhafte Ausgestaltungen und Weiterbildungen der im Anspruch 1 angegebenen Erfindung zum Gegenstand.

Gemäß Anspruch 2 ist die Führung für den Reibbremsbelag als Linearführung ausgebildet, die den Reibbremsbelag in Richtung der Bremsscheibe verschiebbar führt. Eine solche Linearführung kann beispielsweise eine Stangen- oder eine Kulissenführung sein. Die Linearführung kann eine Geradführung sein, was jedoch nicht zwingend ist.

Gemäß Anspruch 4 ist die Führung so ausgebildet, dass der gegen die drehende Bremsscheibe gedrückte Reibbremsbelag die Führung in Richtung eines größer werdenden Winkels zur Bremsscheibe, d. h. im Sinne einer Verringerung der Bremsunterstützung, beaufschlagt. Dadurch wird eine Selbstverstärkung der Bremsunterstützung vermieden, die bis zu einer Selbsthemmung, d. h. einem Blockieren der Scheibenbremse führen kann. Diese Ausgestaltung der Erfindung ermöglicht eine gute Dosierbarkeit der Scheibenbremse und gewährleistet in jedem Betriebszustand die Möglichkeit, die Bremsunterstützung mit geringer oder ohne Stellenergie zu verringern, und zwar bis auf Null.

Aufgrund Ihrer Bremsunterstützung und ihrer hohen Dynamik eignet sich die erfindungsgemäße Scheibenbremse zu einer elektromechanischen Betätigung gemäß Anspruch 7. Es genügt ein vergleichsweise kleiner Elektromotor mit geringer Stromaufnahme und niedrigem Gewicht zum Betätigen der Scheibenbremse. Die Scheibenbremse lässt sich kleinbauend und leicht ausbilden, ihr Bremssattel einschließlich der elektromechanischen Betätigungseinrichtung baut nur wenig größer als ein Bremssattel einer hydraulischen Scheibenbremse. Dadurch lässt sich die erfindungsgemäße Scheibenbremse innerhalb einer Felge eines Fahrzeugrades unterbringen.

### Zeichnung

Die Erfindung wird nachfolgend anhand zweier Ausführungsbeispiele näher erläutert. Es zeigen:
Figur 1 eine Schnittdarstellung einer erfindungsgemäßen Scheibenbremse mit Blickrichtung radial auf eine Bremsscheibe; und
Figur 2 eine abgewandelte Ausführungsform der Scheibenbremse aus Figur 1 gemäß der Erfindung.

Die Zeichnung ist als schematisierte und vereinfachte Darstellung zu verstehen.

### Beschreibung der Ausführungsbeispiele

Die in der Zeichnung dargestellte, erfindungsgemäße Scheibenbremse 10 weist einen Bremssattel 12 auf, der als Schwimmsattel ausgebildet ist, d. h. er ist quer zu einer Bremsscheibe 14 verschieblich. Die Scheibenbremse 10 ist elektromechanisch betätigbar, sie weist eine Betätigungseinrichtung 16 mit einem Elektromotor 18 und einem Spindeltrieb 20 auf. Der Elektromotor 18 ist als Hohlwellenmotor ausgebildet, er weist eine Hohlwelle 22 auf, die eine ebenfalls mit 22 bezeichnete Mutter des Spindeltriebs 20 bildet. Der Spindeltrieb 20 ist reibungsarm als Kugelgewindetrieb ausgebildet. Er weist die Mutter 22 auf, die über Kugeln 24 mit einer Spindel 26 in Eingriff steht. Durch drehenden Antrieb der Mutter 22 wird die Spindel 26 in axialer Richtung verschoben. Die Mutter 22 des Spindeltriebs 20, die zugleich die Welle 22 des Elektromotors 18 ist, ist über ein Axial-Kegelrollenlager 28 in axialer Richtung in einem Motor- und Getriebegehäuse 30 axial abgestützt und drehbar gelagert. Das Motor- und Getriebegehäuse 30 ist Bestandteil des Bremssattels 12. Es ist auch möglich, das Motor- und Getriebegehäuse 30 am Bremssattel 12 anzuflanschen, beispielsweise anzuschrauben.

An einem der Bremsscheibe 14 zugewandten Ende der Spindel 26 ist eine Brücke 32 befestigt, die ein Joch 34 und zwei Schenkel 36 aufweist.

Die Brücke 32 ist in der Mitte ihres Jochs 34 starr mit der Spindel 26 verbunden. Die beiden Schenkel 36 der Brücke 32 stehen in Richtung der Bremsscheibe 14 vom Joch 34 ab. An freien, der Bremsscheibe 14 zugewandten Enden der Schenkel 36 der Brücke 32 sind Rollen 38 drehbar gelagert, mit denen die Brücke 32 an einer der Bremsscheibe 14 abgewandten Seite eines verschiebbaren Reibbremsbelags 40 anliegt.

Der verschiebbare Reibbremsbelag 40 ist zwischen der Brücke 32 der Betätigungseinrichtung 16 und der Bremsscheibe 14 im Bremssattel 12 angeordnet. Zum Betätigen der Scheibenbremse 10 wird der Elektromotor 18 in einer Zuspannrichtung bestromt, wodurch sich die Welle 22 des Elektromotors 18 dreht. Durch ihre Drehung verschiebt die Welle 22, die zugleich die Mutter 22 des Spindeltriebs 20 ist, die Spindel 26 in Richtung der Bremsscheibe 14. Über die Brücke 32 drückt die Spindel 26 den verschiebbaren Reibbremsbelag 40 gegen die Bremsscheibe 14. Durch das Drücken des Reibbremsbelags 40 gegen die eine Seite der Bremsscheibe 14 wird der als Schwimmsattel ausgebildete Bremssattel 12 quer zur Bremsscheibe 14 verschoben und drückt dadurch einen auf der gegenüberliegenden Seite der Bremsscheibe 14 unbeweglich im Bremssattel 12 einliegenden, festen Reibbremsbelag 42 in an sich bekannter Weise gegen die andere Seite der Bremsscheibe 14. Die von beiden Seiten gegen die Bremsscheibe 14 gedrückten Reibbremsbeläge 40, 42 üben ein Bremsmoment auf die Bremsscheibe 14 aus, sie bremsen die Bremsscheibe 14.

Zum Verringern des Bremsmoments oder zum vollständigen Lösen der Scheibenbremse 10 wird der Elektromotor 18 in einer Rückdrehrichtung bestromt, so dass sich die Reibbremsbeläge 40, 42 von der Bremsscheibe 14 lösen und die Bremsscheibe 14 frei drehbar ist.

Der mit der Betätigungseinrichtung 16 gegen die Bremsscheibe 14 drückbare Reibbremsbelag 40 ist zum Drücken gegen die Bremsscheibe 14 und zum Abheben von der Bremsscheibe 14 mit einer Führung 44 verschiebbar im Bremssattel 12 geführt. Die Führung 44 ist im dargestellten und beschriebenen Ausführungsbeispiel der Erfindung als Kulissenführung 46, 50 ausgebildet. Der Reibbremsbelag 40 weist einen bezüglich der Bremsscheibe 14 radial nach außen stehenden Kulissenzapfen 46 auf. Der Kulissenzapfen 46 liegt in einer Nut 50 in einem Verstellrad 48 ein, die radial in dem Verstellrad 50 angebracht ist. Die Nut 48 bildet eine Kulissenbahn, in der der Kulissenzapfen 46 und damit der Reibbremsbelag 40 verschiebbar ist. Das Verstellrad 48 ist um eine gedachte Drehachse drehbar im Bremssattel 12 gelagert. Die Drehachse verläuft parallel, im dargestellten Ausführungsbeispiel radial zur Bremsscheibe 14. Das Verstellrad 48 weist eine Verzahnung 52 nach Art eines Zahnrads an seinem Umfang auf, wobei die Verzahnung 52 auf einen Umfangswinkel von ca. 90° unterbrochen ist. Mit der Verzahnung 52 des Verstellrads 48 kämmt ein Zahnrad 54, das drehfest auf eine Abtriebswelle eines zweiten Elektromotors 56 aufgesetzt ist. Der Elektromotor 56 kann beispielsweise als Schrittmotor oder als Getriebemotor mit angeflanschtem (Planeten-) Getriebe ausgebildet sein.

Auf einer dem Betrachter abgewandten, bezüglich der Bremsscheibe 14 radial inneren Seite des Reibbremsbelags 40 ist eine zweite, mit der vorstehend beschriebenen Führung 44 übereinstimmende Führung deckungsgleich angeordnet. Diese zweite Führung ist vom Reibbremsbelag 40 und dem Bremssattel 12 verdeckt und deswegen in der Zeichnung nicht sichtbar. Sie weist ebenfalls ein Verstellrad auf, das um dieselbe Drehachse wie das sichtbare Verstellrad 48 drehbar ist. In eine Kulissenbahn dieses Verstellrads greift ein bezüglich der Bremsscheibe 14 vom Reibbremsbelag 40 radial nach innen abstehender, mit dem sichtbaren Kulissenzapfen 46 gleichachsiger Kulissenzapfen ein.

Die beiden Verstellräder 48 sind gemeinsam synchron verstellbar, ihre Kulissenbahnen 50 sind stets deckungsgleich, so dass die Kulissenzapfen 46 auf der radial äußeren und der radial inneren Seite des Reibbremsbelags 40 stets in derselben Richtung verschiebbar geführt sind. Zum gemeinsamen, synchronen Verstellen können die beiden Verstellräder 50 auf einer gemeinsamen Welle drehfest angebracht sein. Im dargestellten Ausführungsbeispiel weist der zweite Elektromotor 56 auf beiden Stirnseiten ein Zahnrad 54 auf, die mit der Verzahnung 54 der Verstellräder 50 kämmen. Die beiden Zahnräder 52 des zweiten Elektromotors 48 sind drehfest auf einer gemeinsamen, beidseitig aus dem Elektromotor 56 vorstehenden Abtriebswelle angebracht.

Durch Bestromen des zweiten Elektromotors 56 lassen sich die Verstellräder 50 auf der radial äußeren und der radial inneren Seite des Reibbremsbelags 40 verschwenken und dadurch die Kulissenbahn 52 in ihrem Winkel zur Bremsscheibe 14 verstellen.

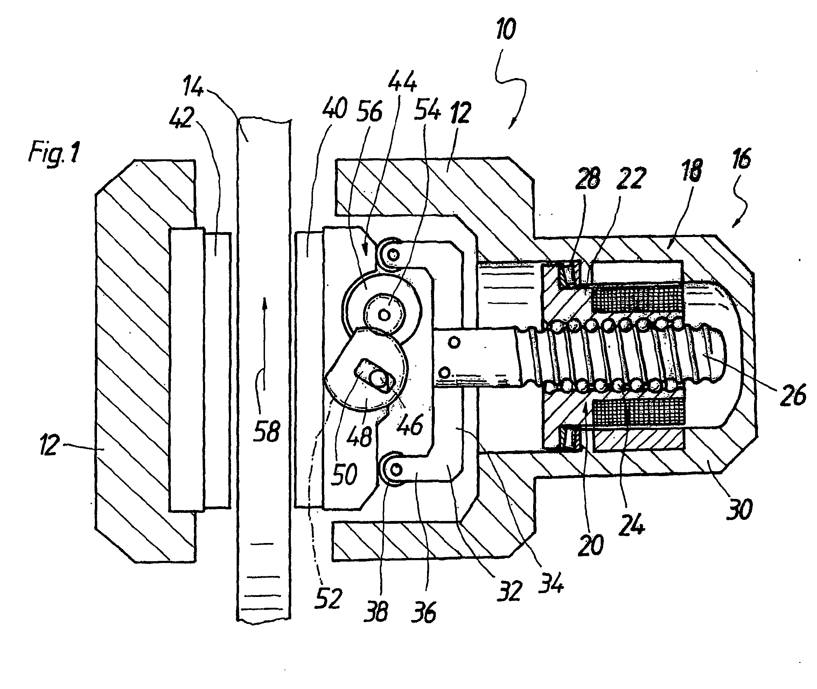

Zur Erläuterung der Funktion der verstellbaren Führung 44 des Reibbremsbelags 40 wird nachfolgend eine Drehung der Bremsscheibe 14 in Richtung des Pfeils 58 angenommen. Zum Bremsen wird wie weiter oben beschrieben durch Bestromung des Elektromotors 18 der verschiebbare Reibbelag 40 mit der Betätigungseinrichtung 16 gegen die Bremsscheibe 14 gedrückt. Der Reibbremsbelag 40 bewegt sich dabei in Richtung der Kulissenbahn 50. Das Verstellrad 48 wird wie in Figur 1 dargestellt so verdreht, dass die Kulissenbahn 50 schräg in Drehrichtung 58 der Bremsscheibe 14 zur Bremsscheibe 14 verläuft. Der Reibbremsbelag 40 wird dadurch beim Drücken gegen die Bremsscheibe 14 schräg mit einer Komponente in Drehrichtung 58 der Bremsscheibe 14 auf die Bremsscheibe 14 zu verschoben. Die drehende Bremsscheibe 14 übt eine Reibungskraft auf den gegen sie gedrückten Reibbremsbelag 40 aus, die parallel zur Bremsscheibe 14 in deren Umfangs- bzw.

Sekantenrichtung und in Drehrichtung 58 der Bremsscheibe 14 gerichtet ist. Diese Reibungskraft bewirkt aufgrund der schräg zur Bremsscheibe 14 gestellten Kulissenbahn 50 eine Kraftkomponente in Längsrichtung der Kulissenbahn 50. Diese Kraftkomponente in Längsrichtung der Kulissenbahn 50 bewirkt wiederum eine zusätzlich Andruckkraft des Reibbremsbelags 40 gegen die Bremsscheibe 14, die die Zuspannkraft der erfindungsgemäßen Scheibenbremse 10 erhöht. Die Scheibenbremse 10 weist eine Bremsunterstützung auf, ihre Betätigungseinrichtung 16 erbringt nur einen Teil der den Reibbremsbelag 40 gegen die Bremsscheibe 14 drückenden Zuspannkraft. Der andere Teil der Zuspannkraft des Reibbremsbelags 40 gegen die Bremsscheibe 14 wird in beschriebener Weise von der rotierenden Bremsscheibe 14 als Folge der Reibungskraft zwischen der Bremsscheibe 14 und dem Reibbremsbelag 40 über die schräg zur Bremsscheibe 14 gestellte Führung 44, 50 aufgebracht. Der nicht von der Betätigungseinrichtung 16 aufgebrachte Teil der Zuspannkraft ist um so größer, je weiter die Kulissenbahn 50 von einer zur Bremsscheibe 14 rechtwinkligen Ausrichtung weg in Richtung eines zunehmend spitzer werdenden Winkels in Drehrichtung 58 der Bremsscheibe 14 verstellt wird. Durch eine solche Verstellung der Kulissenbahn 50 erhöht sich die durch die Reibungskraft zwischen der Bremsscheibe 14 und dem Reibbremsbelag 40 bewirkte Andruckkraft des Reibbremsbelags 40 gegen die Bremsscheibe 14 und damit die Bremsunterstützung der erfindungsgemäßen Scheibenbremse 10. Die Höhe der Bremsunterstützung ist somit durch Verstellen des Winkels der Kulissenbahn 50 zur Bremsscheibe 14, also durch Verschwenken des Verstellrads 48 mit dem zweiten Elektromotor 56 einstellbar.

Das Verstellrad 48 der erfindungsgemäßen Scheibenbremse 10 ist so dicht an der Bremsscheibe 14 angeordnet, dass bei maximaler Andruckkraft des Reibbremsbelags 40 gegen die Bremsscheibe 14 und bei maximal abgenutztem Reibbremsbelag 40 der Kulissenzapfen 46 nicht über die gedachte Drehachse des Verstellrads 48 hinweg in Richtung zur Bremsscheibe 14 verschoben wird. Der Kulissenzapfen 46 befindet sich also immer auf einer der Bremsscheibe 14 abgewandten Seite der Drehachse des Verstellrads 48, im Extremfall ist der Kulissenzapfen 46 koaxial zur Drehachse des Verstellrads 48. Dadurch beaufschlagt die von der Bremsscheibe 14 auf den Reibbremsbelag 40 ausgeübte Reibungskraft das Verstellrad 48 über den Kulissenzapfen 46 mit einem Drehmoment, das in Richtung eines größer werdenden Winkels zwischen der Kulissenbahn 50 und der Bremsscheibe 14 wirkt. Die von der Bremsscheibe 14 auf den Reibbremsbelag 40 ausgeübte Reibungskraft beaufschlagt das Verstellrad 48 also im Sinne einer Verringerung der Bremsunterstützung. Eine Selbstverstärkung der Bremsunterstützung wird vermieden und das Verstellrad 48 lässt sich momentenfrei in Richtung einer rechtwinkligen Ausrichtung der Kulissenbahn 50 zur Bremsscheibe 14 rückstellen, in der die Bremsunterstützung Null ist.

Bei umgekehrter Drehrichtung der Bremsscheibe 14 (Rückwärtsfahrt) wird bei Betätigung der Scheibenbremse 10 das Verstellrad 48 in entgegengesetzter Richtung wie in der Zeichnung dargestellt verschwenkt. Die Bremsunterstützung der Scheibenbremse 10 ist deswegen drehrichtungsunabhängig.

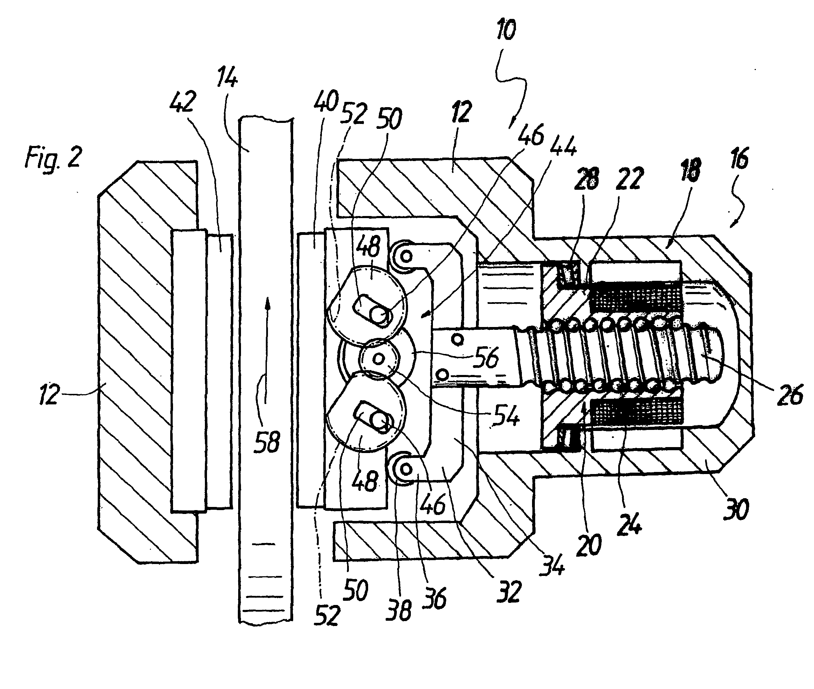

Im Unterschied zu Figur 1 weist die in Figur 2 dargestellte Scheibenbremse 10 zwei Verstellräder 48 anstelle von einem Verstellrad 48 auf, die nebeneinander angeordnet sind. Wie in Figur 1 weisen die beiden Verstellräder 48 jeweils eine Kulissenbahn 50 auf, in der ein Kulissenzapfen 46 des Reibbremsbelags 40 verschiebbar einliegt. Die beiden Verstellräder 48 weisen eine Verzahnung 52 auf, die mit einem Zahnrad 54 des zweiten Elektromotors 56 kämmt, so dass die beiden Verstellräder 48 gemeinsam und synchron miteinander schwenkbar sind.

Die Kulissenbahnen 50 der beiden Verstellräder 48 sind auf diese Weise stets parallel zueinander ausgerichtet, sie bilden eine Parallelführung 44, 50 für den Reibbremsbelag 40. Wie in Figur 1 sind auch in Figur 2 außer den beiden sichtbaren Verstellrädern 48 auf der radial äußeren Seite des Reibbremsbelags 40 zwei weitere, ebensolche, nicht sichtbare Verstellräder deckungsgleich auf der radial inneren Seite des Reibbremsbelags 40 angeordnet. Die Parallelführung 44, 50 des Reibbremsbelags 40 der in Figur 2 dargestellten Scheibenbremse 10 vermeidet ein Kippen des Reibbremsbelags 40. Die Verstellung der Führung 44 erfolgt in gleicher Weise wie in Figur 1 und bewirkt eine Bremsunterstützung, wie sie zu Figur 1 beschrieben worden ist. Zur Vermeidung von Wiederholungen wird insoweit hinsichtlich Figur 2 Ausführungen zu Figur 1 verwiesen. Für gleiche Bauteile sind in Figur 2 übereinstimmende Bezugszeichen verwendet.

## Patentansprüche

1. Scheibenbremse, mit einem Reibbremsbelag und mit einer Betätigungseinrichtung, mit der zur Erzeugung eines Bremsmoments der Reibbremsbelag gegen die Bremsscheibe drückbar ist, **dadurch gekennzeichnet, dass** die Scheibenbremse (10) eine Führung (44, 50) für den Reibbremsbelag (40) aufweist, deren Winkel zur Bremsscheibe (14) verstellbar ist.

2. Scheibenbremse nach Anspruch 1, **dadurch gekennzeichnet, dass** die Führung (44, 50) als Linearführung ausgebildet ist.

3. Scheibenbremse nach Anspruch 1, **dadurch gekennzeichnet, dass** die Scheibenbremse (10) ein schwenkbares Führungselement (48) aufweist, das die Führung (44, 50) für den Reibbremsbelag (40) aufweist.

4. Scheibenbremse nach Anspruch 1, **dadurch gekennzeichnet, dass** die Führung (44, 50) so ausgebildet ist, dass der gegen die Bremsscheibe (14) gedrückte Reibbremsbelag (40) die Führung (44) in Richtung eines größer werdenden Winkels zur Bremsscheibe (14) beaufschlagt.

5. Scheibenbremse nach Anspruch 1, **dadurch gekennzeichnet, dass** die Führung (44, 50) als Parallelführung ausgebildet ist, die den Reibbremsbelag (40) parallel zur Bremsscheibe (14) verschiebbar führt.

6. Scheibenbremse nach Anspruch 5, **dadurch gekennzeichnet, dass** die Scheibenbremse (10) zwei gemeinsam schwenkbare Führungselemente (48) aufweist, die die Führung (44, 50) für den Reibbremsbelag (40) aufweisen.

7. Scheibenbremse nach Anspruch 1, **dadurch gekennzeichnet, dass** die Betätigungseinrichtung (16) einen Elektromotor (18) und ein Rotations/Translations-Umsetzungsgetriebe (20) zum Drücken des Reibbremsbelags (40) gegen die Bremsscheibe (14) aufweist.

## Claims

1. Disc brake, with a friction brake lining and with an actuating device, by means of which the friction brake lining can be pressed against the brake disc in order to generate a braking torque, **characterized in that** the disc brake (10) has, for the friction brake lining (40), a guide (44, 50), of which the angle to the brake disc (14) is adjustable.

2. Disc brake according to Claim 1, **characterized in that** the guide (44, 50) is designed as a linear guide.

3. Disc brake according to Claim 1, **characterized in that** the disc brake (10) has a pivotable guide element (48) which has the guide (44, 50) for the friction brake lining (40).

4. Disc brake according to Claim 1, **characterized in that** the guide (44, 50) is designed in such a way that the friction brake lining (40) pressed against the brake disc (14) acts upon the guide (44) in the direction of an increasing angle to the brake disc (14).

5. Disc brake according to Claim 1, **characterized in that** the guide (44, 50) is designed as a parallel guide which guides the friction brake lining (40) displaceably parallel to the brake disc (14).

6. Disc brake according to Claim 5, **characterized in that** the disc brake (10) has two mutually pivotable guide elements (48) which have the guide (44, 50) for the friction brake lining (40).

7. Disc brake according to Claim 1, **characterized in that** the actuating device (16) has an electric motor (18) and a rotation/translation conversion mechanism (20) for pressing the friction brake lining (40) against the brake disc (14).

## Revendications

1. Frein à disque comportant une garniture de frein à friction et un dispositif d'actionnement par lequel, pour créer un couple de freinage, la garniture de frein à friction peut être appuyée contre le disque de frein,
**caractérisé en ce que**
le frein à disque (10) présente un guide (44, 50) pour la garniture de frein à friction (40) dont l'angle par rapport au disque de frein (14) est modifiable.

2. Frein à disque selon la revendication 1,
**caractérisé en ce que**
le guide (44, 50) est constitué en tant que guide linéaire.

3. Frein à disque selon la revendication 1,
**caractérisé en ce que**
le frein à disque (10) présente un élément de guidage (48) pouvant pivoter, et qui présente le guide (44, 50) pour la garniture de frein à friction (40).

4. Frein à disque selon la revendication 1,
**caractérisé en ce que**
le guide (44, 50) est constitué de manière telle que la garniture de frein à friction (40) poussée contre le disque de frein (14) vient en butée contre le guide (44) en direction d'un angle s'agrandissant par rapport au disque de frein (14).

5. Frein à disque selon la revendication 1,
**caractérisé en ce que**
le guide (44, 50) est constitué en tant que guide parallèle qui guide de manière coulissante la garniture de frein à friction (40) parallèlement au disque de frein (14).

6. Frein à disque selon la revendication 5,
**caractérisé en ce que**
le frein à disque (10) présente deux éléments de guidage (48) pouvant pivoter ensemble et qui présentent le guide (44, 50) pour la garniture de frein à friction (40).

7. Frein à disque selon la revendication 1,
**caractérisé en ce que**
le dispositif d'actionnement (16) présente un moteur électrique (18) et un entraînement de transfert rotation/translation (20) pour appuyer la garniture de frein à friction (40) contre le disque de frein (14).
